# EUROPEAN PATENT APPLICATION

(11) **EP 2 730 543 A1**
(43) Date of publication of application: **14.05.2014**
(21) Application number: 13173869.2
(22) Date of filing: 26.06.2013
(51) Int. Cl.: C02F 1/00, C02F 1/44, B01D 61/02, B01D 61/58, B01D 61/04, B01D 61/12

(54) **Controlling device for reverse osmosis water purifier**

(30) Priority: 08.11.2012 TW 101221638
(71) Applicant: Lan Shan Enterprise Co., Ltd., 508 Changhua County (TW)
(72) Inventor: Lin, Yi-Chou, 508 Changhua County (TW)
(74) Representative: Becker Kurig Straus

(57) **Abstract**

A controlling device (20) for a reverse osmosis water purifier (10) is characterized in that: a water quality sensor (30) senses water quality of purified water and sends a sensing signal to a controller (40) according to a sensing result of water quality; a determination unit (44) of the controller (40) determines whether water quality of purified water is normal according to the sensing signal received; if the determination is negative, the determination unit (44) will generate an abnormal signal such that a user selectively actuates the controller (40) to control a compression motor (18) to stop operating and cut off water supply to a filtration unit (11) of the water purifier (10). Afterward, the user may change a filter cartridge (12) and then resume the water production operation with the controller (40).

## Description

### BACKGROUND OF THE INVENTION

### 1. Technical Field

The present invention relates to reverse osmosis water purifiers, and more particularly, to a controlling device for a reverse osmosis water purifier.

### 2. Description of Related Art

Water is one of the elements essential to life and physiological functions of the human body. Toxins and excretions cannot be removed from the human body without a sufficient amount of water. Accumulation of the toxins and excretions in the human body is harmful thereto and can even cause chronic diseases.

In general, drinking water is produced by boiling tap water. However, although the tap water has been boiled, impurities, heavy metals, and other hazardous substances have not been removed effectively from the boiled tap water. Hence, at present, the best way to drink clean drinking water is to perform several filtration procedures on tap water or any other water source by means of a reverse osmosis water purifier to thereby remove various hazardous substances from water. However, a conventional reverse osmosis water purifier has a drawback described below. Users are unable to confirm independently whether the water quality of the so-called purified water is normal; in case the purified water is contaminated during a water production process because an internal pipe cracks or for any other reason, the users will drink the contaminated purified water unwittingly until a maintenance technician who inspects regularly the conventional reverse osmosis water purifier fixes the problem. As a result, the prior art poses a risk to the users' health.

### SUMMARY OF THE INVENTION

It is an objective of the present invention to provide a controlling device for a reverse osmosis water purifier to sense a water quality status of purified water at any time, such that the reverse osmosis water purifier maintains satisfactory water production quality,

In order to achieve the above and other objectives, the present invention provides a controlling device. The controlling device comprises a water quality sensor and a controller. The water quality sensor is disposed between a filtration unit and a pressurized water tank and adapted to sense water quality of purified water produced by the filtration unit and generate a sensing signal according to a sensing result. The controller has a control unit and a determination unit. The control unit is electrically connected to a compression motor and adapted to control the start and shutdown of the compression motor. The determination unit is electrically connected to the water quality sensor and the control unit and adapted to receive the sensing signal generated from the water quality sensor and determine whether water quality of the purified water is normal according to the sensing signal. If the determination is affirmative, the determination unit will generate an abnormal signal, such that a user can selectively actuate the control unit to control the compression motor and the inlet solenoid valve according to the abnormal signal in a manner that the compression motor stops operating and the inlet solenoid valve suspends water supply from the water source to the filtration unit. Due to the aforesaid technical features, a user can change a filter cartridge independently or request a maintenance technician to change a filter cartridge.

Preferably, the water quality sensor senses total dissolved solids (TDS) in the purified water and thereby generates the sensing signal.

Preferably, the controller further has a compulsory starting unit electrically connected to the compression motor and adapted to start the compression motor compulsorily and thereby enable the reverse osmosis water purifier to perform a water production operation at any water source.

Preferably, the controller has an operation panel electrically connected to the control unit and the compulsory starting unit to enable a user to operate the controller.

### BRIEF DESCRIPTION OF THE SEVERAL VIEWS OF THE DRAWINGS

FIG. 1 is a perspective view of a reverse osmosis water purifier according to a preferred embodiment of the present invention;

FIG. 2 is a front view of an operation panel of a controller according to a preferred embodiment of the present invention; and

FIG. 3 is a block-diagram flowchart of water production carried out with the reverse osmosis water purifier according to a preferred embodiment of the present invention;

### DETAILED DESCRIPTION OF THE EMBODIMENT OF THE INVENTION

A preferred embodiment of the present invention is presented below and illustrated with the accompanying drawings to describe the structure and benefits of the present invention in detail.

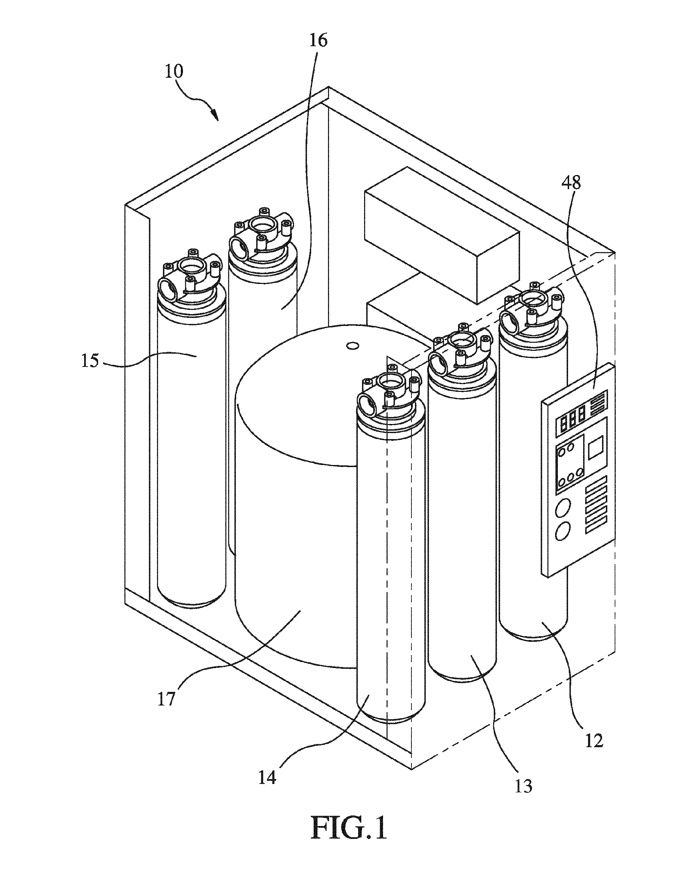

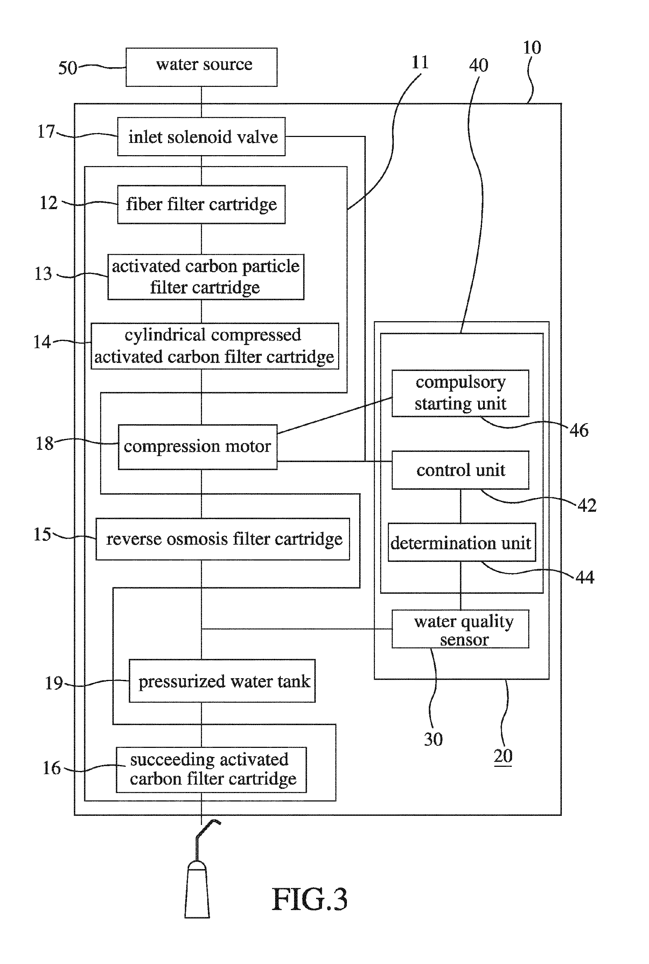

Referring to FIG. 1, there is shown a perspective view of a controlling device 20 for a reverse osmosis water purifier 10 according to a preferred embodiment of the present invention. The reverse osmosis water purifier 10 has therein a filtration unit 11. As shown in FIG. 3, the filtration unit 11 comprises a fiber filter cartridge 12, an activated carbon particle filter cartridge 13, a cylindrical compressed activated carbon filter cartridge 14, a reverse osmosis filter cartridge 15, and a succeeding activated carbon filter cartridge 16. An inlet solenoid valve 17 is disposed between the fiber filter cartridge 12 and a water source 50 and adapted to control the water feeding state of the water source 50. A compression motor 18 is disposed between the cylindrical compressed activated carbon filter cartridge 14 and the reverse osmosis filter cartridge 15 and adapted to increase the incoming water pressure. A pressurized water tank 19 is disposed between the reverse osmosis filter cartridge 15 and the succeeding activated carbon filter cartridge 16 and adapted to store purified water produced by the reverse osmosis filter cartridge 15.

The controlling device 20 of the present invention comprises a water quality sensor 30 and a controller 40. The water quality sensor 30 is electrically connected between the reverse osmosis filter cartridge 15 and the pressurized water tank 19 and adapted to sense water quality of purified water produced by the reverse osmosis filter cartridge 15 and sense total dissolved solids (TDS) in the purified water to thereby generate a sensing signal.

The controller 40 has a control unit 42, a determination unit 44, and a compulsory starting unit 46. The control unit 42 is electrically connected to the compression motor 18 and the inlet solenoid valve 17 and adapted to actuate the compression motor 18 and the inlet solenoid valve 17. The determination unit 44 is electrically connected to the water quality sensor 30 and the control unit 42 and adapted to receive the sensing signal generated from the water quality sensor 30 and determine whether water quality of purified water is normal according to the sensing signal. The controller 40 has an operation panel 48 disposed on the external surface of the water purifier 10. The operation panel 48 is electrically connected to the control unit 42 and the compulsory starting unit 46 and adapted to enable a user to operate the controller 40. If the water quality of the purified water is found to be abnormal, the determination unit 44 will generate an abnormal signal by means of the sensing signal generated from the water quality sensor 30 and display the abnormal signal on the operation panel 48, such that the user can perceive the abnormal signal. Then, the user can use the operation panel 48 to operate the control unit 42 to control the compression motor 18 and the inlet solenoid valve 17 and thereby cause the compression motor 18 to stop operating and cause the inlet solenoid valve 17 to synchronously suspend water supply from the water source 50 to the filtration unit 11. The compulsory starting unit 46 is electrically connected to the compression motor 18 and adapted to start the compression motor 18 compulsorily and cause the inlet solenoid valve 17 to start admitting water.

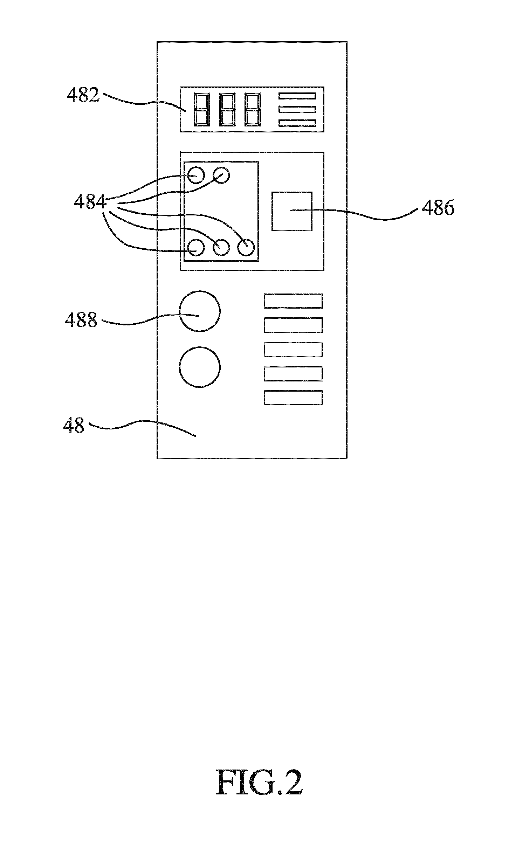

As soon as a water production operation is performed on tap water, tap water is delivered to the inlet solenoid valve 17 and then passes through the fiber filter cartridge 12, the activated carbon particle filter cartridge 13, and the cylindrical compressed activated carbon filter cartridge 14 in sequence. Then, tap water is pressurized by the compression motor 18 to thereby pass through the reverse osmosis filter cartridge 15 before being stored in the pressurized water tank 19. At this point in time, the water quality sensor 30 begins to sense water quality of purified water and display the sensing result on a water quality status display unit 482 of the operation panel 48 (shown in FIG. 2), such that the user is kept informed of the current water quality status of the purified water. The water quality sensor 30 stops sensing as soon as the pressurized water tank 19 is completely filled with the purified water.

If water quality abnormality does not occur throughout the water production process and the time to change the filter cartridge comes, a filter cartridge replacement alert indicator 484 of the operation panel 48 will light up, and a buzzer inside the water purifier 10 will buzz to urge the user to change the filter cartridge. At this point in time, the user either changes the filter cartridge on his/her own or requests a maintenance technician to change the filter cartridge. By contrast, if water quality abnormality occurs during the water production process, the water quality status display unit 482 of the operation panel 48 will display the abnormal status instantly; meanwhile, the user can press a filter cartridge replacement button 486 of the operation panel 48 (shown in FIG. 2) to trigger the control unit 42 of the controller 40 to control the compression motor 18 to stop operating and cause the inlet solenoid valve 17 to synchronously suspend water supply from the water source 50 to the filtration unit 11; as a result, the water production operation is suspended, thereby allowing the user to either change the filter cartridge on his/her own or request a maintenance technician to change the filter cartridge. Upon completion of inspection and replacement, the user presses a zeroing button 488 of the operation panel 48 to trigger the control unit 42 of the controller 40 again to control the compression motor 18 to resume its operation; meanwhile, the inlet solenoid valve 17 will allow water to pass, thereby continuing the water production operation.

The water source 50 available to the reverse osmosis water purifier 10 of the present invention is not necessarily tap water. Alternatively, the water source 50 for use in the water production operation can be a water source other than tap water, but may bring about an disadvantage - water pressure is too low to start the compression motor 18; to overcome the disadvantage, the user presses the zeroing button 488 of the operation panel 48 for three seconds approximately to trigger the compulsory starting unit 46 of the controller 40 to start the compression motor 18 compulsorily, so that water can pass through the inlet solenoid valve 17 compulsorily opened, thereby allowing the water production operation to take place.

In conclusion, the controlling device 20 of the present invention keeps users informed of the current water quality status of purified water such that, in case of water quality abnormality, measures can be taken instantly to enable the reverse osmosis water purifier 10 to maintain satisfactory water production quality. Furthermore, the controlling device 20 of the present invention enables the reverse osmosis water purifier 10 to operate in conjunction with different water sources 50 and thereby meet different needs. It is also feasible that the controlling device 20 of the present invention has one said water quality sensor 30 installed at each filter cartridge such that the controlling device 20 generates the sensing signal as soon as the water quality of the purified water produced by one of the filter cartridges becomes abnormal, thereby allowing the user to operate the control unit 42 of the controller 40 to suspend the water production operation.

Last but not least, constituent elements described in the above embodiment of the present invention are illustrative rather than restrictive of the present invention. Replacement or change of other equivalent elements should be regarded as those defined by the claims of the present invention.

## Claims

1. A controlling device (20) for a reverse osmosis water purifier (10), the reverse osmosis water purifier (10) comprising a filtration unit (11), a pressurized water tank (19) connected to the filtration unit (11), a compression motor (18) connected between the filtration unit (11) and the pressurized water tank (19), and an inlet solenoid valve (17) connected between a water source (50) and the filtration unit (11), the controlling device comprising:
a water quality sensor (30) connected between the filtration unit (11) and the pressurized water tank (19) and adapted to sense water quality of purified water produced by the filtration unit (11) and generate a sensing signal according to a sensing result; and
a controller (40) having a control unit (42) and a determination unit (44), the control unit (42) being electrically connected to the compression motor (18) and the inlet solenoid valve (17), the determination unit (44) being electrically connected to the water quality sensor (30) and the control unit (42) and adapted to receive the sensing signal generated from the water quality sensor (30) and determine whether water quality of the purified water is normal according to the sensing signal, wherein, if the determination is negative, the determination unit (44) will generate an abnormal signal such that a user selectively actuates the control unit (42) to control the compression motor (18) and the inlet solenoid valve (17) according to the abnormal signal to thereby cause the compression motor (18) to stop operating and cause the inlet solenoid valve (17) to suspend water supply from the water source to the filtration unit (11).

2. The controlling device (20) of claim 1, wherein the water quality sensor (30) senses total dissolved solids (TDS) in the purified water and thereby generates the sensing signal.

3. The controlling device (20) of claim 1 or 2, wherein the controller (40) further has a compulsory starting unit (46) electrically connected to the compression motor (18) and adapted to start the compression motor (18) compulsorily and thereby cause the inlet solenoid valve (17) to start admitting water.

4. The controlling device (20) of claim 3, wherein the controller (40) has an operation panel (48) electrically connected to the control unit (42) and the compulsory starting unit (46).

5. The controlling device (20) of claim 4, wherein the operation panel (48) has a filter cartridge replacement button (486) and a zeroing button (488), wherein, when pressed under an external force, the filter cartridge replacement button (486) triggers the control unit (42) to stop the compression motor (18) and causes the inlet solenoid valve (17) to suspend water supply from the water source (50) to the filtration unit (11), wherein, when pressed under an external force, the zeroing button (488) triggers the control unit (42) to actuate the compression motor (18) and the inlet solenoid valve (17) to cause the water source (50) to continue supplying water to the filtration unit (11).
